# EUROPÄISCHE PATENTSCHRIFT

(11) **EP 1 248 932 B1**
(45) Veröffentlichungstag und Bekanntmachung des Hinweises auf die Patenterteilung: **03.11.2004**
(21) Anmeldenummer: 01900071.0
(22) Anmeldetag: 16.01.2001
(51) Int. Cl.: F24J 1/00

(54) **LATENTSPEICHER-BAUELEMENT FÜR GEBÄUDE**
CONSTRUCTION ELEMENT FOR BUILDINGS THAT ACCUMULATES LATENT HEAT
ELEMENT DE CONSTRUCTION POUR BATIMENT, DESTINE A EMMAGASINER LA CHALEUR LATENTE

(30) Priorität: 20.01.2000 CH 108002000
(43) Veröffentlichungstag der Anmeldung: 16.10.2002
(73) Patentinhaber: GlassX AG, 8005 Zürich (CH)
(72) Erfinder: Schwarz, Dietrich, 7013 Domat / Ems (CH)
(74) Vertreter: Isler & Pedrazzini AG
(86) Internationale Anmeldenummer: PCT/CH2001/000024
(87) Internationale Veröffentlichungsnummer: WO 2001/053756

(56) Entgegenhaltungen:
- CH-A- 688 164
- DE-A- 3 718 844
- US-A- 2 595 905
- US-A- 4 572 864
- US-A- 4 846 151
- US-A- 5 770 295

## Beschreibung

Die Erfindung betrifft ein Latentspeicher-Bauelement gemäss Oberbegriff des Patentanspruchs 1.

In der CH-A-688 164 ist ein Bauelement mit Latentwärme-Speicher bekannt. Eine der Wände eines Raumes ist durch eine Wand gegen aussen abgetrennt, die aussen eine transparente Wärmedämmung und innen einen durch zwei Scheiben gebildeten Zwischenraum enthält. In diesem Zwischenraum ist ein Latentwärme-Speicher eingefüllt, zum Beispiel Kalciumchlorid-Hexahydrat.

Ein weiteres Bauelement mit einem Latentwärme-Speicher ist aus US-A-4'572'864 bekannt. In einer Ausführungsform der US'864 transmittiert der Speicher sichtbares Licht und absorbiert Strahlung im Infrarotbereich.

WO 98/51973 offenbart ein Fassadenelement mit drei Scheiben und zwei durch die Scheiben gebildete Zwischenräume. Der dem Gebäudeinnern zugewandte Zwischenraum ist mit einem Gas gefüllt. Im äusseren Zwischenraum zirkuliert eine Flüssigkeit, welche so eingefärbt ist, dass sie infrarotes Licht absorbiert, aber für sichtbares Licht mindestens teilweise transparent ist.

US-A-4'846'151 hingegen offenbart einen Sonnenkollektor mit einem Absorber. Hier wird die Wärme unmittelbar an ein Gas- oder Flüssigkeitssystem abgegeben. Es ist vorgeschlagen, vor dem Absorber eine Low-E-Schicht anzubringen.

DE-A-37'18'844 beschreibt ein Fenster, welches zur Verschattung von Innenräumen Prismen aufweist. Das nicht in den Innenraum transmittierte Licht wird in einen Energieempfänger umgeleitet und dort in Strom oder Wärme umgewandelt.

Der vorliegenden Erfindung liegt die Aufgabe zugrunde ein Bauelement der obigen Art derart weiterzubilden, dass es effizienter in der Lichtabsorption ist und sich im Sommer nicht überhitzt. Diese Aufgabe wird durch die Merkmale des Anspruchs 1 gelöst.

Nachfolgend werden Ausführungsbeispiele des Bauelements anhand der Zeichnung erläutert. Darin zeigen:

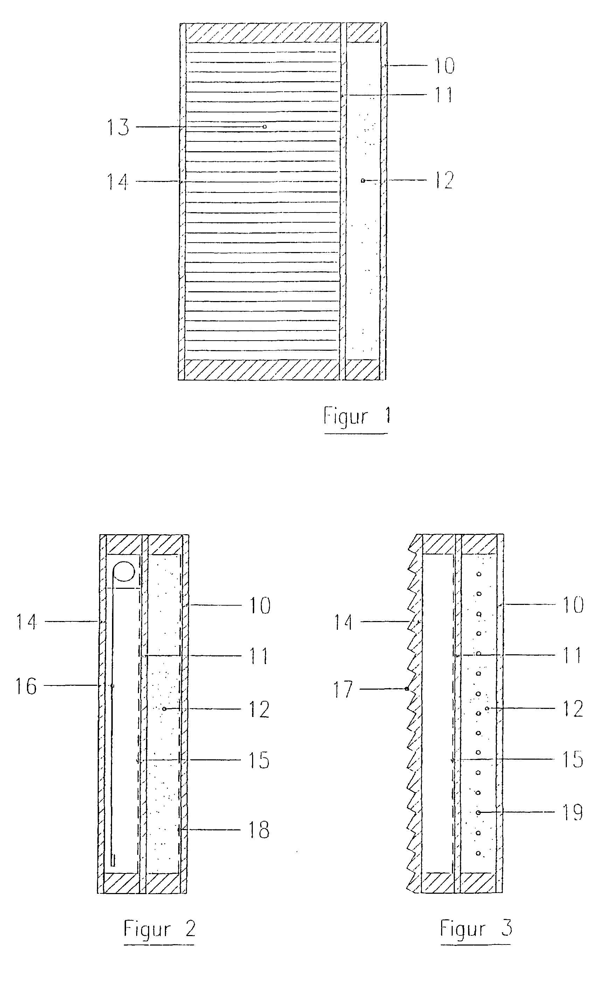

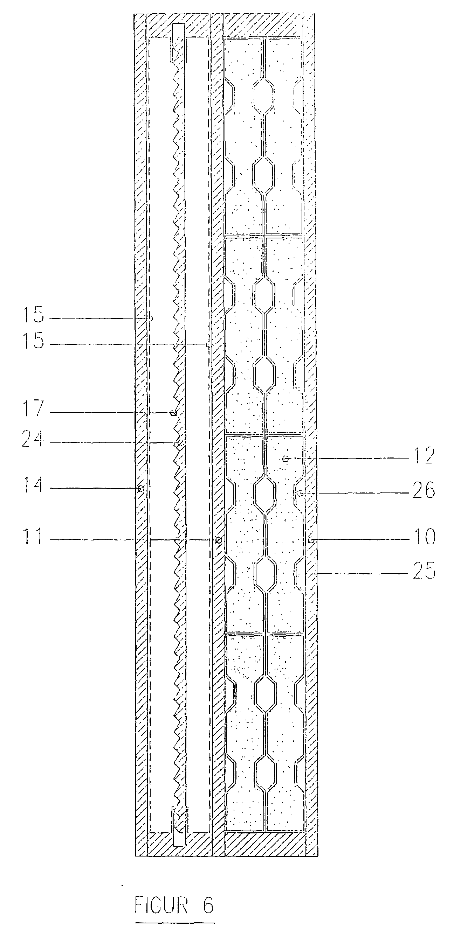

- Figuren 1-6: Querschnitte durch verschiedene Bauelemente

Das Bauelement gemäss Figur 1 besteht aus transparenten Scheiben 10, 11, die aus Glas oder Kunststoff gefertigt sein können. Sie bilden einen Zwischenraum. Dieser ist abgedichtet und mit einem Latentspeichermaterial 12 gefüllt. Beim Latentspeichermaterial 12 wird seine Schmelzenthalpie zum Speichern von thermischer Energie ausgenützt. Mit Vorzug benützt man ein Material, das bei Raumtemperatur schmilzt, zum Beispiel Kalciumchlorid-Hexahydrat oder Paraffine. So können im Bereich der Raumtemperatur während des Schmelzvorgangs im Latent-Speicher ein mehrfaches an thermischer Energie im Vergleich zu herkömmlichen Baustoffen wie Beton oder Backstein gespeichert werden. Diese Materialien werden mit Temperaturen über dem Schmelzpunkt in den Zwischenraum gegossen oder mit den Scheiben 10, 11 koextrudiert. Es gibt auch die Möglichkeit, den Latent-Speicher im festen Zustand zwischen die Scheiben 10, 11 einzubringen. Mit Vorteil wird anschliessend die Luft in den minimalen Hohlräumen evakuiert, damit die Wärmeleitung im Bauelement nicht gestört wird. Bei den Paraffinen gibt es die Möglichkeit, das Paraffin durch Stützmaterialien auch während des Phasenwechsels fest/flüssig formstabil zu machen. Das Paraffin ist im Stützmaterial völlig homogen verteilt und selbst bei hohen Betriebstemperaturen tritt kein flüssiges Paraffin aus. Eine weitere Möglichkeit, um das Paraffin formstabil zwischen die Scheiben 10, 11 einzufügen besteht darin, dass das Paraffin in dichten Hohlkörpern 25 abgefüllt und verschlossen wird, so dass diese, mit Paraffin gefüllten, Hohlkörper im Trockenverfahren zwischen die Scheiben 10, 11 gestapelt werden. Diese Hohlkörper werden mit Vorteil aus Kunststoff gefertigt. Damit der statische Druck, der sich durch die gestapelten Hohlkörper 25 bildet abgeleitet werden kann, werden die Hohlkörper 25 untereinander und mit den Scheiben 10 und 11 teilweise oder ganz verklebt. Es entsteht ein statischer Verbund, der auch die Stabilität der Scheiben 10, 11 erhöht.

Das Latentspeichermaterial 12 ist zumindest im infraroten Bereich des Sonnenlichtspektrums lichtabsorbierend eingefärbt oder pigmentiert. Vorzugsweise ist es dunkel eingefärbt, damit die Absorption des Sonnenlichts direkt im Latentspeichermaterial 12 erfolgt. Die Absorptionsenergie wird im Latent-Speicher als thermische Energie gespeichert und verlangsamt, kontinuierlich wieder als Wärmeabstrahlung ins Rauminnere abgegeben. Diese Einfärbung muss so dunkel gewählt werden, dass soviel einfallende Sonnenstrahlung im Latentspeichermaterial 12 absorbiert wird, ohne dass der Innenraum durch die transmitierte Solarstrahlung überhitzt. Der Absorbtionsgrad der Einfärbung muss je nach Standort und Konstruktionsweise des Gebäudes bestimmt werden. Zum Beispiel muss bei einem Gebäude mit Leichtbauweise, wo dass Bauelement direkt eine Aussenwand bildet, mehr Licht im Latent-Speicher absorbiert werden als in einem Gebäude mit massiver Bauweise, in welchem das Bauelement als Fassadenelement eine Mauer verkleidet. Ebenso muss die konventionelle Fensterfläche der sonnenzugewandten Fassaden das Gebäude und die zu erwartende solare Einstrahlung am Standort mitberücksichtigt werden. Zudem werden bei der Absorption des Sonnenlichtes im Latentspeichermaterial 12 seine Eigenschaften ausgenützt. Das Latentspeichermaterial Paraffin hat im flüssigen Zustand eine wesentliche höhere Lichttransmission als im festen Zustand. Zudem besitzt es eine schlechte Wärmeleitfähigkeit. Das bedeutet, dass die Latentspeicher-Schicht bei Sonneneinstrahlung von aussen nach innen langsam schmilzt und so die Lichttransmission ebenfalls von aussen nach innen erhöht wird. Dies hat zur Folge, dass die Sonnenstrahlen die gesamte Latentspeicher-Schicht ideal erreichen und dort gespeichert werden, wo sie absorbiert werden. Damit die Solarstrahlen das Paraffin 12 besser aufschmelzen können, werden die Hohlkörper 25 mit Einbuchtungen 26 oder Durchbrüchen versehen, es entstehen Lichtfenster. Die Solarstrahlen dringen durch die Lichtfenster tiefer in die Latentspeicherschicht 12 ein.

Eine weitere Möglichkeit, den Absorbtionsgrad des Bauelementes zu erhöhen, besteht darin, dass die transparente Scheiben 10, 11 oder die Hohlkörper 25 dunkel getönt oder dunkel beschichtet wird. Diese Einfärbungen oder Beschichtungen der Scheibe 10, 11 und der Hohlkörper 25 lassen sich auch zu dekorativen Zwecken nutzen.

Der Aussenseite des Gebäudes zugewandt ist den Scheiben 10, 11 eine transparente Wärmedämmung 13 vorgelagert, die durch eine oder mehrere weitere, transparente Scheibe(n) 14 abgeschlossen ist. Die Wärmedämmung 13 kann zum Beispiel gemäss der WO 98/51973 ausgebildet werden, welche zum integrierenden Bestandteil 1 der vorliegenden Anmeldung erklärt wird. Die Scheibe 14 wird mit Vorteil aus eisenarmem, hochlichtdurchlässigem Weissglas gefertigt, damit die Lichttransmission optimiert wird. Für die transparente isolierende Schicht 13 können auch transparente Kunststoffwaben oder andere transparente Hohlkammerkonstruktionen verwendet werden. Diese sogenannten transparenten Wärmedämmungen 13 haben die Eigenschaft, dass die in den Hohlkammern eingeschlossene Luft als Isolator wirkt, weil die Hohlkammern so fein sind, dass die Konvektion der Luft unterdrückt wird.

Eine weitere Möglichkeit der transparenten Wärmedämmung ist, dass der Zwischenraum zwischen der mittleren Scheibe 11 und der/den äusseren Scheibe(n) 14 mit einem thermisch hoch isolierenden Edelgas gefüllt ist, zum Beispiel Argon, Krypton oder Xenon. Eine weitere Möglichkeit besteht darin, in diesem Zwischenraum die Luft zu evakuieren. Vakuum stellt einen idealen Isolator dar. Die mittlere Scheibe 11 und Scheibe 14 können auf der Aussen- oder Innenseite eine Wärmeschutzbeschichtung 15 (Figur 2) welche auch Low-E-Beschichtung genannt wird, aufweisen. Die äussere Weissglas-Scheibe 14 und die dahinterliegende Gas- oder Vakuumschicht besitzen eine hohe Lichttransmission. Die wärmeschutzbeschichtete mittlere Glasscheibe 11 hat naturgemäss einen reduzierten Gesamtenergiedurchlassgrad. Die anfallende Absorbtionsenergie fällt nicht als Energieverlust an, sondern sie wird in das Latentspeichermaterial nach innen abgeleitet, weil die vorgelagerte, isolierende Schicht und die Wärmeschutzbeschichtung 15 einen thermischen Verlust nach Aussen unterdrücken.

Damit das Bauelement im Sommer nicht überhitzt, ist eine Verschattung auf der Aussenseite der Latentspeicher-Schicht vorzusehen. Bei der Ausführungsform nach Figur 2 ist die Verschattung 16 im äusseren, isolierenden Zwischenraum hinter der äusseren Glasscheibe 14 angebracht. Dies bietet Gewähr, dass das Bauelement mit Überhitzungsschutz als eine stabile, gut funktionierende Einheit hergestellt wird und so auf zusätzliche Verschattungskonstruktionen verzichtet werden kann.

Eine weitere Möglichkeit, die Einstrahlung zu regeln, besteht darin, dass eine äussere Scheibe 24 prismatische Erhöhungen 17 hat. Durch Lichtumlenkung wird so das steil einfallende Sonnenlicht im Sommer nach aussen umgelenkt, wobei das flach einfallende Sonnenlicht im Winter die Scheibe 24 nach innen ungehindert passieren kann. Die Prismen 17 können sowohl auf der Vorder wie auf der Rückseite der Scheibe 14 angeordnet sein. Das Prinzip der Lichtumlenkung machen sich auch Hologramme zum Nutzen, diese sind im Moment jedoch noch sehr teuer. Das Bauelement kann zusätzlich als Heizkörper dienen. Auch in einem Solarhaus werden zusätzliche Heizquellen für die Deckung der benötigten Restwärme bei schlechtem Wetter benötigt. Die Scheibe 10 kann zum Latentspeichermaterial 12 hin als elektrischer Flächenwiderstandsheizkörper 18 ausgebildet werden. Dazu werden leitende Metallbeschichtungen auf die Glasscheibe 10 aufgebracht. Eine weitere Möglichkeit besteht darin, dass wasserführende Rohre 19 im Latent-Speicher integriert sind und so wie bei einem Flächenheizkörper das Wasser bei Bedarf die benötigte Heizenergie an den Latent-Speicher abgibt. Das Latentspeichermaterial 12 bietet die Möglichkeit, dass billiger Nachtstrom in die Speichermasse eingespeist werden kann und am Tag verzögert in Form von Wärme wieder genutzt wird.

Eine weitere Möglichkeit des sommerlichen Uberhitzungsschutzes sind Metalloxydbeschichtung auf der Aussenseite der Scheiben 14 oder 11. Je grösser der Einfallswinkel bezüglich der Senkrechten zu den Scheiben 14, 11 ist, desto grösser ist die Reflektion auf der äusseren Oberfläche der Scheiben 14, 11. Das bedeutet, dass steil einfallendes Sonnenlicht im Sommer stärker reflektiert wird, als flach einfallendes Sonnenlicht im Winter. Gleichzeitig stellt dies eine kostengünstige Lösung dar.

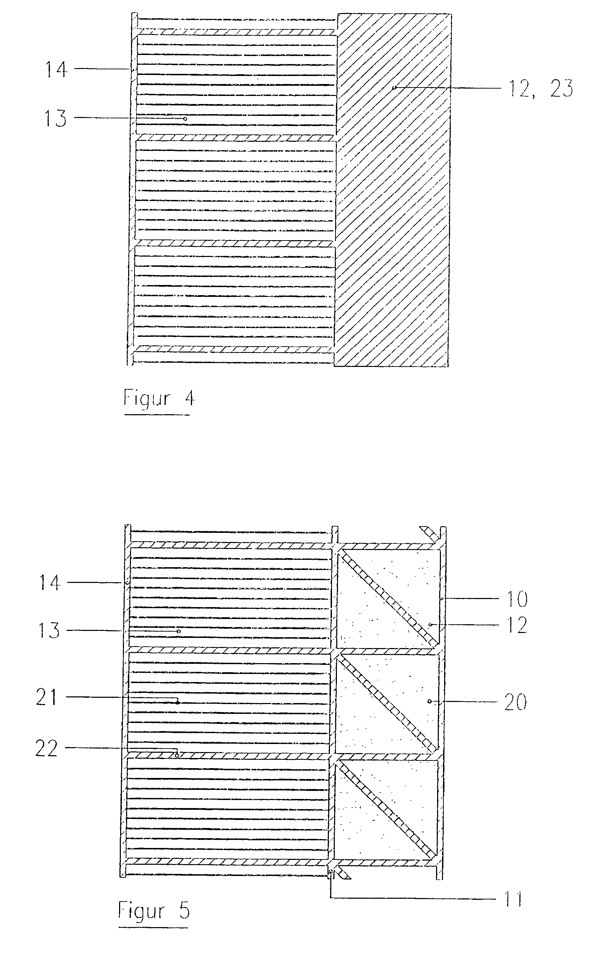

Um das Bauelement bezüglich Kosten zu optimieren, kann es einstückig als Kunststoffelement extrudiert werden. Bei ungebundenem Latentspeichermaterial 12 sind makroskopische Hohlräume 20 nötig, um das Latentspeichermaterial 12, das im flüssigen Zustand nicht formstabil ist, aufnehmen zu können. Mit Vorteil wird der Materialeinsatz von transparentem Kunststoff zur Bildung der Hohlräume 20 in der Scheibe 10, 11 minimiert und die Hohlräume zugleich mit einem maximalen Fassungsvermögen ausgebildet. Dies kann zu fachwerkartigen Strukturen gemäss Figur 5 führen. Um den Wirkungsgrad der Stegplatte insbesondere im Winter zu optimieren, können die Stege 21, 22 einen spitzen Winkel mit der Scheibe 14 bilden.

## Patentansprüche

1. Latentspeicher-Bauelement für Gebäude, umfassend mindestens eine erste transparente Scheibe (14) und eine dazu parallele, zweite Scheibe (10, 11; 23), die ein Latentspeichermaterial (12) enthält, **dadurch gekennzeichnet, dass** das Latentspeichermaterial (12) zumindest im infraroten Bereich des Sonnenlichtspektrums lichtabsorbierend eingefärbt oder pigmentiert ist, dass die bzw. eine der erste(n) scheibe(n) (14, 24) auf einer Seite prismatische Erhöhungen (17) aufweist, derart, dass bei hohem Sonnenstand das Sonnenlicht nach aussen abgelenkt wird und bei tiefem Sonnenstand ungehindert passieren kann, und dass eine der Scheiben (10, 11, 14) mit einer Low-E-Beschichtung (15) beschichtet ist.

2. Bauelement nach Anspruch 1, wobei die erste Scheibe (14) von der zweiten Scheibe (10, 11; 23) durch eine transparente Wärmedämmung (13) getrennt ist.

3. Bauelement nach einem der Ansprüche 1 oder 2, wobei im Zwischenraum zwischen der ersten Scheibe (14) und der zweiten Scheibe (10, 11) eine Beschattungseinrichtung (16) angeordnet ist.

4. Bauelement nach einem der Ansprüche 1 bis 3, wobei das Latentspeichermaterial (12) mit der zweiten Scheibe (23) koextrudiert ist.

5. Bauelement nach einem der Ansprüche 1 bis 4, wobei das Latentspeichermaterial (12) ein bei Raumtemperatur schmelzendes Paraffin oder Salzhydrat enthält.

6. Bauelement nach Anspruch 5, wobei das Latentspeichermaterial in einem Stützmaterial gebunden ist.

7. Bauelement nach einem der Ansprüche 1 bis 5, wobei das Latentspeichermaterial (12) in Hohlkörper (25) abgefüllt ist.

8. Bauelement nach Anspruch 7, wobei die Hohlkörper (25) auf der Aussen- und/oder Innenseite Einbuchtungen (26) oder Durchbrüche haben.

9. Bauelement nach einem der Ansprüche 1 bis 8, wobei das Latentspeichermaterial (12) durch Heizelemente (18, 19) beheizbar ist.

10. Bauelement nach einem der Ansprüche 1 bis 9, wobei mindestens ein Teil (10) der zweiten Scheibe (10, 11) oder die Hohlkörper (25) dunkel getönt oder beschichtet ist.

## Claims

1. Construction element to accumulate latent heat for buildings, comprising at least one first transparent pane (14) and a second pane (10, 11; 23) parallel to said first pane, which second pane contains a material (12) that accumulates latent heat, **characterized by** the fact that the material (12) that accumulates latent heat is dyed or pigmented so that is absorbs light, at least in the infrared range of the solar spectrum, that the first pane or at least one of the first panes (14, 24) has prismatic elevations (17) on one side, so that when the sun is at a high angle, the sunlight is deflected outward, and when the sun is at a low angle, the sunlight passes through unhindered, and whereby one of the panes (10, 11, 14) is coated with a Low-E-coating (15).

2. Construction element as claimed in Claim 1, whereby the first pane (14) is separated from the second pane (10, 11; 23) by transparent thermal insulation (13).

3. Construction element as claimed in one of Claims 1 or 2, whereby a shading device (16) is located in the space between the first pane (14) and the second pane (10, 11).

4. Construction element as claimed in one of the Claims 1 to 3, whereby the material (12) that accumulates latent heat is co-extruded with the second pane (23).

5. Construction element as claimed in one of the Claims 1 to 4, whereby the material (12) that accumulates latent heat contains a paraffin or salt hydrate that melts at room temperature.

6. Construction element as claimed in Claim 5, whereby the material that accumulates latent heat is bonded in a supporting material.

7. Construction element as claimed in one of the Claims 1 to 5, whereby the material (12) that accumulates latent heat is contained in hollow bodies (25).

8. Construction element as claimed in Claim 7, whereby the hollow bodies (25) have depressions (26) or apertures on the outside and/or inside.

9. Construction element as claimed in one of the Claims 1 to 8, whereby the material (12) that accumulates latent heat can be heated by heating elements (18, 19).

10. Construction element as claimed in one of the Claims 1 to 9, whereby at least a portion (10) of the second pane (10, 11) or hollow bodies (25) are colored or coated in a dark color.

## Revendications

1. Module d'accumulation latente destiné à un bâtiment, qui comprend au moins un premier carreau transparent (14) et un deuxième carreau transparent (10, 11, 23) qui est parallèle à celui-ci et qui contient un matériau (12) d'accumulation latente, **caractérisé en ce que** le matériau (12) d'accumulation latente est coloré ou pigmenté de manière à absorber la lumière au moins dans la plage infrarouge du spectre lumineux, **en ce que** le premier carreau ou l'un des premiers carreaux (14, 24) présente sur un côté des saillies prismatiques (17) de nature à dévier la lumière vers l'extérieur quand le soleil est haut dans le ciel et à la laisser passer sans obstacle quand le soleil est bas, et **en ce que** l'un des carreaux (10, 11, 14) est recouvert d'un revêtement à basse émission (15).

2. Module selon la revendication 1, dans lequel le premier carreau (14) est séparé du deuxième carreau (10, 11, 23) par un isolant thermique transparent (13).

3. Module selon l'une quelconque des revendications 1 ou 2, dans lequel un dispositif (16) qui intercepte la lumière est agencé dans l'espace situé entre le premier carreau (14) et le deuxième carreau (10, 11).

4. Module selon l'une quelconque des revendications 1 à 3, dans lequel le matériau (12) d'accumulation latente et le deuxième carreau (23) sont extrudés ensemble.

5. Module selon l'une quelconque des revendications 1 à 4, dans lequel le matériau (12) d'accumulation latente contient une paraffine ou un sel hydraté qui fond à température ambiante.

6. Module selon la revendication 5, dans lequel le matériau d'accumulation latente est coulé dans un matériau de support.

7. Module selon l'une quelconque des revendications 1 à 5, dans lequel le matériau (12) d'accumulation latente est coulé dans des chambres creuses (25).

8. Module selon la revendication 7, dans lequel les chambres creuses (25) présentent des creux (26) ou des perforations sur leur côté extérieur et/ou sur leur côté intérieur.

9. Module selon l'une quelconque des revendications 1 à 8, dans lequel le matériau (12) d'accumulation latente peut être chauffé au moyen d'éléments chauffants (18,19).

10. Module selon l'une quelconque des revendications 1 à 9, dans lequel au moins une partie (10) du deuxième carreau (10, 11) ou les chambres creuses (25) sont teintées ou recouvertes d'une couleur sombre.
